# EUROPEAN PATENT SPECIFICATION

(11) **EP 1 743 465 B1**
(45) Date of publication and mention of the grant of the patent: **15.11.2017**
(21) Application number: 04731001.6
(22) Date of filing: 04.05.2004
(51) Int. Cl.: H04L 29/06

(54) **METHOD AND SYSTEM FOR ACCESS CONTROL IN DISTRIBUTED OBJECT-ORIENTED SYSTEMS**
METHODE UND SYSTEM ZUR ZUGRIFFSKONTROLLE IN VERTEILTEN OBJEKT-ORIENTIERTEN SYSTEMEN
PROCEDE ET SYSTEME DE COMMANDE D'ACCES DANS DES SYSTEMES ORIENTES OBJETS REPARTIS

(43) Date of publication of application: 17.01.2007
(73) Proprietor: Telecom Italia S.p.A., 20123 Milano (IT)
(72) Inventor: DE LUTIIS, Paolo, Telecom Italia S.p.A., I-10148 Torino (IT); DI CAPRIO, Gaetano, Telecom Italia S.p.A., I-10148 Torino (IT); MOISO, Corrado, Telecom Italia S.p.A., I-10148 Torino (IT)
(74) Representative: Bergadano, Mirko
(86) International application number: PCT/EP2004/004718
(87) International publication number: WO 2005/107204

(56) References cited:
- WO-A-02/48858
- DE-U- 20 301 512
- XTRADYNE WHITEPAPER: "Strong Security Protection for OSA/Parlay Gateways and Servers"[Online] March 2004 (2004-03), pages 1-16, XP002312449 ONLINE Retrieved from the Internet: URL:www.xtradyne.com> [retrieved on 2005-01-04]
- RIECHMANN, T; HAUCK F.J.: "Meta Objects for Access Control: Extending Capability-Based Security" PROCEEDINGS OF MEETING ON NEW SECURITY PARADIGMS, ACM, [Online] 1998, pages 1-6, XP002312450 NEW YORK Retrieved from the Internet: URL:www-vs.informatik.uni-ul> [retrieved on 2005-01-04] cited in the application

## Description

### Field of the invention

The present invention relates to computer security in object-oriented distributed computing environment. In particular, the invention relates to a system and a method for monitoring distributed objects and their references, wherein the distributed objects run in a service architecture.

### Background

Distributed systems are by nature more vulnerable to security breaches than are non-distributed, i.e., stand-alone, systems as there are more places where the system can be attacked. In distributed computing, information is communicated and processed on many machines without direct control on each of these machines and there exist more access points for an intruder to attack, thereby leading to a shortfall of the complete control on the management of the information. Compared to traditional client/server systems, security in distributed object-oriented systems is also more challenging, because distributed objects can both play both client and server roles, so a simple division between trusted server components and untrusted client components no longer holds. In addition, security threats in traditional object-oriented distributed systems, such as eavesdropping, masquerade (spoofing) and infiltration, are exacerbated by the exponential growth of the use of insecure public networks like the Internet and the related Internet-based technologies.

In object-oriented systems, access control can be based on capabilities, a well-known paradigm, in which in order to access an object a program must have a special token, i.e., a unique code assigned to each object at the time it is created. This token identifies the object and gives the program the authority to perform a specific set of actions on the object, e.g., invoke a specific method (e.g., write, read, execute). In other words, a capability for an object, referred also to as an object reference, is simultaneously an identifier for the object and a list of allowed methods. The possession of the capability represents the right to call these methods. To prevent unauthorized access, capability security gives the right to a program to access a particular object either by receiving the capability for another object that already holds that right (through a message during creation) or by being the program that created the particular object.

Some capability-based systems allow restriction of access by attaching access rights to the capability: access is denied if the client's capability does not include the necessary rights. Other systems allow capabilities to be revoked, i.e., withdrawn by the issuer: an exception is raised if a client tries to access the corresponding object after revocation. Capability-based security has some drawbacks. A capability cannot prevent method invocations from leaking unprotected references to untrusted objects and/or from decoding the capability when it is transmitted.

Riechmann T. and Hauck F.J. in "Meta Objects for Access Control: Extending Capability-Based Security", published in Proceedings of Meeting on New Security Paradigms, ACM, New York 1998, p. 17, describe a security paradigm based on meta-objects. Meta objects can be attached to object references and control the access to the corresponding objects. Expiration can be implemented by a meta object. Meta objects are automatically invoked by the run time system when a method is called using an object reference. The meta object checks, at each request, the current time and date against the expiration time. If the capability has expired the meta object denies access.

Applicants have observed that a security paradigm based on meta objects attached to object references is created by the programmer and is executable only in the environment (the run time system) where it has been created.

Role-based access control is an attempt to associate authorization rights to specific user roles. This is a mandatory model, where rights are granted by administrators and are based on privilege principles according to the user's functions. "A discretionary access controls by means of usage conditions" by E. Born and H. Stiegler, published in Computers & Security, 13 (1994), p. 437-450, proposes a concept of user-defined access control for an object, which is implemented by references to appropriate usage conditions. Access to the object is granted if granted by at least one usage condition.

U.S. patent No. 6,658,573 describes methods for protecting resources in distributed computer systems in which, to invoke the use of a service, the names of both the entity owning or providing the service and of the service itself must be known. Access to a service is obtained by mapping its name to its location, i.e., by resolving the name. An entity's access is controlled by controlling the name resolution process, e.g., by limiting the visibility of services for this entity. Control is executed by an interception manager that has access to context sensitive information, such as the source entity name, the destination entity name and their data. Guard objects, which are inserted by the interception manager, can be associated with a particular object reference and are called before and/or after the object reference is used.

Applicants have realized that controlling an entity's access by controlling the name resolution process occurs with the object creation and cannot prevent the object reference from being stolen during object's utilization. Furthermore, this type of access control depends on the run time system that executes the code and cannot be implemented in some standards of distributed computing for linking network nodes, such as Parlay and CORBA.

In EP application No. 0816969 capability security is extended in a distributed system where an object is presumed to legitimately hold a reference to a particular object only if the object knows some key associated to the particular object. Object references being passed are encrypted upon transmission and then decrypted upon arrival at the intended destination.

Applicants have noted that building an effective cryptography protocol in open environments is a hard task and key management is complex. Furthermore, a finite risk exists that secret keys or algorithms to be used along the object reference can be cracked, the risk being higher in public network contexts and exacerbated in complex open environments such as the Internet that contains a large variety of systems and users.

Modern generations of client/server applications are usually built using middleware supporting the interaction between distributed objects, also called distributed object middleware. The term 'middleware' denotes a software layer that sits between different parts of a distributed application or different applications and that serves to shield these application parts or applications from the heterogeneity of the underlying computer platform and networks. The middleware, which lies between the operating system and the application on each side of the system, provides a uniform interface that is independent of the operating system and network technology of the local computer platform, thus allowing faster development of applications and easier porting of applications to other computer platforms. In other words, the role of the middleware is to permit the application developers to write applications that interface to the middleware, rather than multiple lower-level interfaces.

Various middleware-based architectures have emerged to attempt to provide a solution to different level of scalability and flexibility of applications. Architecture is concerned with the organization, overall structure and communication patterns, both for applications and middleware itself. The Common Object Request Broker Architecture (CORBA), a non-commercial venture by the Object Management Group (OMG), is currently an industry standard for open distributed computing architecture. One of the main strengths of CORBA is its language and platform independence, which makes it well suited for heterogeneous environment such as the Internet. The object manager in CORBA is the Object Request Broker (ORB), which is responsible for passing object references to requesting clients, instantiating objects as necessary and marshalling object requests between different machines. All messages between client and server must go through the ORB. Typically, a client requests a reference to an object on a server with the intent of invoking methods on it.

CORBA security is handled by the Security Service (CORBASEC), which defines a framework with functionality for authentication, authorization, encryption and auditing. For example, Security Service Specification v. 1.8 published by OMG in March 2002 in www.omg.org is a comprehensive treatment of security in CORBA. In CORBASEC, everything, including obtaining the information necessary for making authorization decisions, is done before the method invocation is dispatched. Every method invocation that enters the ORB environment is intercepted by an object called *Principal Authenticator* that, if it is a successful authentication, creates a *Credential* object, which can be used to obtain both the client and server credentials, which are stored in execution contexts and define identities and privileges. The credentials are then passed to an *AccessDecision* object, also referred to as reference monitor, which determines whether the client's invocation is allowed.

A network protocol, called Internet Inter-ORB Protocol (IIOP), is defined to allow the use of CORBA middleware across the TCP/IP network. Both the ORB and the IIOP facilitate the interoperability and integration process across different hardware and software platforms and thus the communication among objects implemented with CORBA-compliant products from different vendors. CORBA objects use IOR (Interoperable Object Reference) to communicate. An IOR allows an application to make remote method calls on a CORBA object. In general, for object A to talk to object B, A uses the IOR of object B. Once the application obtains an IOR, it can access the remote CORBA object via the IIOP. Obtaining JORs is the same as obtaining object references.

The security of the middleware architecture is ultimately limited by the security of the underlying operating systems. CORBASEC assumes that the ORBs involved in the communication are trusted to each other. In order to create security over untrusted networks cryptography mechanisms must be implemented in conjunction with CORBASEC. Lampinen T. in "using SPKI Certificates for Authorization in CORBA based Distributed Object-Oriented Systems", published in Proceedings of the 4th Nordic Workshop on secure IT systems (NordSec '99), p. 61-81 (November 1999), describes a way of implementing authorization by using Simple Public Key Infrastructure (SPKI) certificates.

A middleware-based architecture that enables the creation of telecommunication services is the Parlay. Parlay standard is an open standard, which has been created by the Parlay Group with the goal of promoting convergence of communications and computing (http://www.parlay.org). The Parlay is a set of object-oriented application programming interfaces (APIs) that enable network operators, independent software manufacturers and service providers to offer products and services, which use the functionality of existing networks, in a systematic and standard manner. The Parlay APIs are object-oriented and are technology independent: they are designed to be used for mobile networks, fixed networks and for next-generation networks based on the IP protocol.

The 3^{rd} Generation Partnership Project (3GPP, http://www.3gpp.org), in charge of specifying 3G mobile network, adapted Parlay as the method for creating services in UMTS. 3GPP introduced these APIs under the abbreviation OSA - Open Service Architecture or Open Service Access. The APIs are thus nowadays referred to as OSA/Parlay APIs.

The OSA/Parlay APIs consist of two groups of interfaces: 'Framework Interfaces' and 'Service Interfaces'. The Framework Interfaces, herein referred also to as Framework, provide basic mechanisms prior to the usage of actual network functions. They comprise Authentication and Authorisation to identify the application that wants to access the API. After successful authentication, the Discovery function can be used to query information about availability and network functions. The access to the Framework is always the first step for the use of the OSA/Parlay API. If the application is authorized, the Service Interfaces can be used. The Service Interfaces enable the client application to access the so-called 'Service Capability Servers' (SCSs), which represent the available network functions that can be used to implement telecommunication services, such as call control, messaging, location, content charging, user interaction, etc. The application can select one or more Services. The Framework verifies if the application is authorized to use the Services, for instance according to some subscription profile and negotiates the parameters of their usage, e.g., parameters derived from a Service Level Agreement (SLA) that the application has to sign, typically on-line. When the agreed parameters are signed, the Framework returns the reference to the requested Services. Example use of the Framework Interfaces through the use of sequence diagrams can be found in "Parlay APIs 2.1 Framework Sequence Diagrams" published by the Parlay Group Inc. in http://www2.informatik.hu-berlin.de/∼xing/Lib/ParlaySpec/parlayAPIs_2_1_FwSeqDiags_2_1_1.pdf.

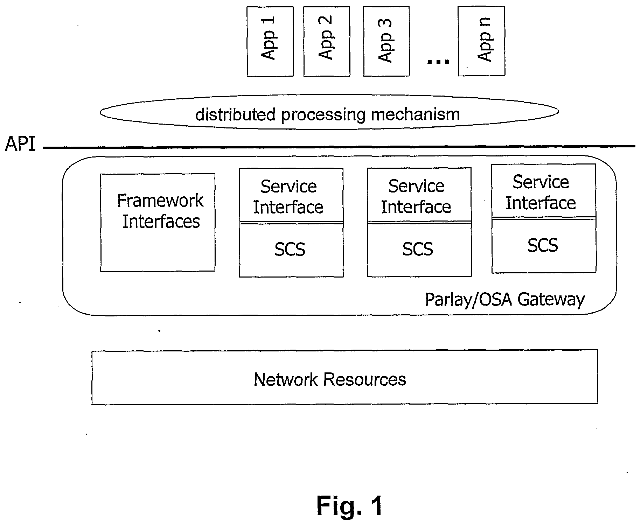

Figure 1 schematically illustrates the typical architecture of OSA/Parlay. APIs are exposed by core network gateways, normally known as OSA/Parlay gateways (in Fig.1 only a gateway is shown), which provide a bridge to the external applications and application servers (exemplified by App 1, App 2 and App 3 in Fig. 1). Framework interfaces and Service Interfaces are implemented in the OSA/Parlay gateway. The Service Interfaces are provided/implemented by the SCSs that are logical entities that interact with the network elements (e.g., SSP, HLR, Location Server, etc.). The Service Interfaces provide thus the access to the Network Capabilities (Network Resources) that a network operator wants to export through the Parlay gateway.

Presently, OSA/Parlay gateways mostly use CORBA as middleware infrastructure and expose the Parlay APIs using CORBA. CORBA uses an Interface Description Language (IDL) to specify the interfaces that objects will present to the domains. CORBA specifies then a mapping from IDL to a specific implementation language like C++ or Java™.

Alternatively, Parlay APIs can be defined on other open standards such as Java™ Remote Method Invocation (Java™ RMI) and Web Service technologies based on Simple Object Access Protocol (SOAP), preferably defined in Web Services Description Language (WSDL). In principle, any programming language can be used to develop OSA/Parlay applications.

WO patent application No. 02/48858 describes a method of access control in an OSA/Parlay architecture. A framework includes and co-operates with a gateway entity, e.g. a IP firewall. A client application intending to use a service of the OSA signs a service agreement with the framework which then sets the rules for the gateway entity accordingly. After expiry of the service agreement, the gateway entity inhibits further use of the service by the client application.

Applicants have observed that access to a service and its denial are established by the firewall for the client application's IP address. After expiry of the contract, the IP firewall inhibits any further connection attempt arising from the client's IP address, i.e., all services become not accessible for the application. In addition, it appears difficult to distinguish among client applications that share the same IP address.

Applicants have realized that the OSA/Parlay environment, particularly when used in conjunction with CORBA, is highly vulnerable to malicious attacks. After the authorization phase, which comprises the signature of the agreed parameters, the client application receives from the Framework a SCS to the selected Service in the form of a CORBA IOR. With this knowledge, the client is authorized to freely use the Service object according to the Service Level Agreement (digitally) signed during the previous phase. Although the agreed parameters are generally valid only for a single session of the application, the obtained object IOR is a readable string that can be replicated or stolen by a malicious entity operating either in the communication network between the operator and the service provider or directly in the service provider domain. For example, the malicious entity (e.g., a malicious client) can act as man-in-the-middle by assuming the identity of a legitimate party (masquerade) and by intercepting the messages. Applicants have further noted that it is difficult to control the usage of a previously released IOR and to check the real identity of the client application. The IOR can be seen as a key to access the object, which is in danger of being forged or stolen.

### Summary of the invention

The invention relates to a method and a system for accessing network resources in communication networks. Access to network resources is provided by granting access to the network service capabilities that represent for the client application the capabilities to use the requested services. The service capabilities are the abstractions of the underlying network functionality. According to the present invention, access to service capabilities is controlled at the application level by controlling the access through a gateway wherein an object-oriented service architecture, based on application programming interfaces (APIs), is implemented. The APIs are defined at the application level, which can be represented (in a non limiting way) by the Layer 7 as defined in the OSI Model. In general, the service architecture is an architecture that enables the creation of telecommunication services. Preferably, the service architecture is open, i.e., is free from proprietary standards and generally publicly available. Open systems can be implemented in conformity with the specifications of the open standard. More preferably, the open service architecture is defined in OSA/Parlay standards. In OSA/Parlay, the service capabilities are provided by the service capability servers (SCSs) and they are accessed by the methods defined in the OSA/Parlay interfaces.

The gateway is the logical access point, which may comprise one or more physical access points, to the network resources. For instance, the gateway can be a computing machine identified by an IP address or a Web site linked to an IP address.

Access control is carried out by means of a logical entity, which is linked to the gateway and configured so that it intercepts all the communications passing between the client applications and the gateway. This logical entity will be referred hereafter to as the Service Reference Monitor or SRM. The SRM recognizes the communications defined according to the APIs of the service architecture among all the traffic that occurs in and out the gateway. For instance, for communications through an OSA/Parlay gateway, the SRM preferably recognizes any communication in OSA/Parlay standard among the intercepted messages. If not any, the SRM has to recognize at least the communications defining the interactions for requesting and obtaining the services. The messages that are not according to the OSA/Parlay standard can be discarded by the SRM.

In particular, the SRM intercepts each invocation from the initial request of a service from a client application to the creation of the service capability that allows the client to use the service. The service capability is identified by an object reference and the SRM has to gain knowledge of that object reference in order to implement its control policy. According to the control policy, the SRM associates a lifetime to the object reference to the service capability. At the expiry of the lifetime, the SRM destroys the service capability by deleting its object reference. By restricting the time window during which a service capability is active and thus can be used, the probability of malicious attacks is considerably decreased. For example, if a malicious application that has replicated or stolen the service capability tries to access the service after the expiry of the lifetime, the access will be denied because the object identifying the access to the service has been destroyed.

According to a preferred embodiment, the SRM registers the time to when the service starts being active, e.g., when the client receives the service capability, and associates to the object reference to the service capability a time slot, Δt. The service object is destroyed by the SRM at t₀+Δt.

Alternatively, the lifetime associated to the object reference to the service capability can be represented by a maximum number of invocations, which is set by the SRM, and when this maximum number is reached, the service capability is destroyed. In a further embodiment, the lifetime can be a period of time, in which no activity is performed with the service. After the inactivity period has elapsed, the service capability is destroyed.

In order to enforce the aging policy to the service capabilities, the SRM captures the object reference to the capability of a service requested by a client application. Preferably, the SRM captures also the object reference identifying the client that makes the request of the service. For instance, the SRM registers and copies the strings identifying the object references within its software entity.

The use of a service starts when the client application obtains the capability of using the service, which is represented by an object reference hereafter referred to as the SCS-R.'

If the SCS-R is a "slave" object, i.e., it does not include methods such as "destroy" or "create", knowledge of the "manager" object that controls the methods to "create" and "destroy" the SCS-R is necessary. In this case, in order to implement the access policy the SRM does not need to capture the SCS-R, but it needs to capture the manager object.

In case the programming model employs a SCS-R that includes the methods "create" and "destroy", a manager object controlling the SCS-R is not necessary and the SRM can invoke the methods directly to the SCS-R. In this case, the SRM does need to capture the SCS-R to enforce its aging policy.

Hereafter, the object reference that enables the client application to obtain a service capability will mean either the reference to the service capability itself, i.e., SCS-R, or the object reference to the interface to which the client can request the service, said interface being the "manager" object, which manages the SCS-R by calling the methods "create" and "destroy" on the SCS-R.

In an OSA/Parlay gateway, any invocation on the service capability requires knowledge of the object reference identifying the instance of the service requested by the client, i.e., the service token. From the client's side, the service token is the logical name, i.e., the logical abstraction at the application level, of the instance that allows the client to obtain the service capability, whereas from the server's side it is the name of the instance of the service that the server provides to the client. In a Parlay context, the service token has a defined meaning and the client obtains it after it has selected the service. Knowledge of the service token is required in the Parlay APIs to call the methods on the object reference to the service capability.

Preferably, the SRM gains knowledge of the object reference identifying the client application that makes the request of a service so that it knows the client's interface to which the service capability is sent. In OSA/Parlay communications, knowledge of the client's reference allows understanding on when and how the application requests and obtains the reference to the service capability. In a CORBA context, this client's reference will be referred to as IOR1, which is the object reference that remotely manages the reference to the service capability from the client's side.

An important advantage of the invention is that access control to the network resources is performed at the application level, which communicates the policy to the lower levels by using the language in which the APIs are defined, e.g., IDL/CORBA or WDSL/SOAP. It is to be noted that with lower level it is meant also the application level, but at a level lower than the APIs.

### Definitions

*Clients* or client applications are the software entities that initiate invocations.

*Targets* or server applications are the software entities that respond to the client's invocations.

*Objects* are software entities made of data and/or definition of actions that can be performed on data. An object could be an item of stored data (e.g. a file) or a purely computational operation and in general is a identifiable, encapsulated entity that can provide one or more services when requested by a client.

*Distributed objects* are objects that can live (execute) anywhere in the network and can be accessed by remote clients via remote method invocation.

*Object-oriented System* is defined as a collection of interacting objects that accomplish tasks. Similarly, object-oriented programming is a programming paradigm in which programs are organized as cooperative collections of objects and differs from standard procedural programming in that it uses objects, not algorithms, as the fundamental building blocks for creating computer programs. C++ and Java are examples of computer languages that support object-oriented programming.

*Distributed environment* or *system* is a system designed to support development of applications and services which can exploit a physical architecture consisting of multiple autonomous processing elements that do not share primary memory but cooperate by sending asynchronous or possibly synchronous messages over a communication network (definition taken from that of Blair and Stefani, 1998). A distributed environment generally includes multiple computer systems connected by computer networks.

*Interface* in object-oriented programming is what and how unrelated objects use to communicate with each other.

*Application programming interface* (API) is a set of definitions of the ways in which one piece of computer software communicates with another. It is a method of achieving abstraction, usually (but not necessarily) between lower-level and higher-level software.

*OSI Model* (the short for Open Systems Interconnection Reference Model) is a widely used layered abstract description for digital communications between application processes running in distinct systems. The model employs a hierarchical structure of seven layers. An implementation of several OSI layers is often referred to as a stack.

### Figures

Fig.1 schematically illustrates the basic structure of a typical OSA/Parlay architecture.
Fig. 2 schematically illustrates the access control system including a service reference monitor (SRM) according to an embodiment of the present invention.
Fig. 3 is a diagram illustrating a structure of a SRM according to an embodiment of the present invention.
Fig. 4 depicts an example of an object reference table as part of the structure of the SRM illustrated in Fig. 3.
Figs. 5a and 5b are examples of part of the sequence diagrams defined in OSA/Parlay standard, which are relative to the method of the present invention.

### Detailed description

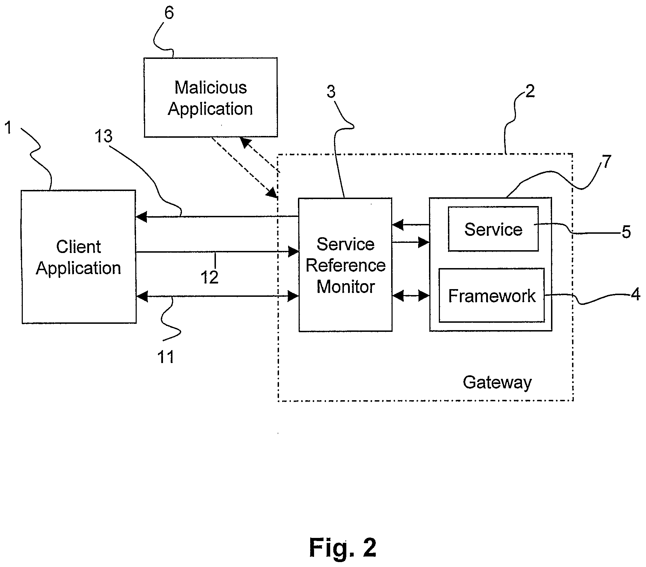

Figure 2 schematically illustrates an OSA/Parlay gateway that bridges the communication networks to the client applications, according to a preferred embodiment of the invention. The computer systems host a middleware and thus the objects that implement the application logic. Communication networks can be wired or wireless networks, like wired IP networks or Wireless Local Area Networks (WLANs).

According to the definition given above, a client is the application software entity that initiates an invocation. Although it is not excluded that each site can play the dual role of client and server, in the present embodiment the targets, i.e. the application software entities that respond to invocations, are hosted on the server side. The gateway 2 allows applications to access the network resources, which can be provided by network operators, e.g., fixed or mobile telecommunication operators. The gateway itself can be run by network operators so that secure access to the network resources of the services is managed by the operators. In the present embodiment, gateway 2 is an OSA/Parlay gateway comprising Parlay APIs 7, which are, at an abstract level, specified in the Parlay (including OSA/Parlay) specifications. Such APIs comprise Framework Interfaces 4 (or Framework) and Service Interfaces 5. Preferably, the APIs use CORBA as the middleware infrastructure and expose the Parlay APIs using CORBA. In other words, in a preferred embodiment, the Parlay APIs are defined in CORBA, which is the software architecture at a lower level with respect to that of the APIs and in particular reaching the level of the communication networks. Alternatively, the APIs may be defined as Web Services to emulate the CORBA architecture and APIs. The invention is however not limited to a particular distributed object middleware used to create the interface layer for the APIs at the network level or to the language used by the middleware to specify the interfaces for exposing the objects.

Gateway 2 interfaces with a client application 1, which can be hosted in the domain of the service providers, e.g., the partners of the network operators. Client applications are executed by computer systems, which may be linked to end-user terminals, such as fixed-line phones, mobile phones or personal computers (PCs). For instance, the computer systems hosting the client applications may receive requests from the end-user terminals and may transfer the requested files or other data to the terminals.

A Service Reference Monitor (SRM) 3 is linked to the gateway 2 such that all the traffic between the client application 1 and the gateway is intercepted by the SRM. In a preferred embodiment, the SRM is an independent software entity in the server domain and no modification of the Parlay gateway software is necessary, i.e., the standard Parlay client-server interactions are not modified by the presence of the SRM. Alternatively, the SRM is a Parlay software module under the direct control of the Framework, which may instruct the SRM. This last option implies a modification of the standard Parlay Framework. In either case, the SRM may be under the full control of the network operator that owns the gateway.

Preferably, the SRM is linked to the gateway by a secure link such as a dedicated cable. Alternatively, the secure link is provided by a secure socket layer or by physically locating the SRM close to the gateway, e.g., in the same building. The SRM can alternatively be implemented in the gateway, e.g., it can be installed in the same computing machine that hosts the gateway, the connection between the SRM and the APIs being through TCP/IP socket interfaces.

The client application 1 interacts with gateway 2 only through the SRM 3, which intercepts all the traffic between the client applications and the gateway. The traffic comprises the initial handshake phase indicated with 11 in Fig. 2, the service capability invocations (12) and the notifications (13) that enable the client to access the service capability. The handshake phase, where.the client makes the initial invocation requesting the access to one or more services, may comprise an authentication phase, e.g., using challenge/response exchanges, in which the client is identified and authorized to access the APIs 7. In particular, always referring to the example of Fig. 2, the client accesses the Framework 4 requesting the use of the Parlay APIs 7. If the client is authorized, the client 1 can use the Service Interfaces 5 and invoke the service capability of the requested service. The Service Interfaces 5 enable the client application 1 to access the Service Capability Servers (SCSs), which represent the capabilities of the network. Access to an SCS is obtained by owning the interface reference to the SCS, which will be referred herein to as the SCS-R. In the Parlay terminology, the SCS-R is generally referred to as SCSIFRef. The interface reference SCS-R is an object capability where the object is the requested service. Through the SCS-R, the application can invoke methods on the service whose execution could invoke actions on the network resources, e.g., through network protocols.

Each client-server invocation from the initial invocation in the handshake phase to the end of the notification phase, i.e., when the application obtains the service capability, is intercepted by the SRM. In this way, the SRM can identify the client requesting the service, the requested service and the interfaces to which the invocations have been made. The SRM captures, e.g., creates a copy to which it can accede, of the object references that are necessary for identifying the requested service and, preferably, the application making the request.

According to a preferred embodiment, the SRM registers the instant, to, at which the client obtains the interface reference SCS-R, i.e., the start of the service. From that moment a time slot, Δt, is assigned by the SRM to the SCS-R. After time Δt has expired, e.g., after 3600 seconds, the object reference SCS-R is destroyed by the SRM that blocks any further activity related to the service.

The aging policy established by the SRM implies that, if the same application (application 1 in Fig. 2) wants to access the same service, i.e., by using the same object reference, access is denied after the lifetime has expired. The application needs to go again through the authentication phases and a new service capability must be created and initialized, all the method invocations being under the control of the SRM that enforces an aging policy to the new service capability.

Assuming that a malicious application 6, which has stolen the service capability from application 1, i.e., the SCS-R, tries to access the service after the expiry of the lifetime, the access will be denied because the service object has been destroyed and all connections related to that service capability have been deleted.

After the lifetime has expired, the access to the service is denied to any application because the object reference identifying the service has been destroyed. Therefore, security is also ensured in case the malicious application 6 has stolen the reference of the client application 1 and masquerade as the legitimate application.

Instead of triggering a time slot, the instant at which the service starts, to, can trigger the counting of the number of invocations by the client. After a maximum number of invocations, which is set by the SRM, e.g., four invocations, have been made, the SRM destroys the object reference and the client reference. Alternatively, the object reference can be destroyed after a time Δt' without any activity from the client side.

In a preferred embodiment, the SRM is transparent, i.e., invisible, to the client during its exchanges with the gateway, allowing the control without the client applications being aware of the SRM. In this case, the SRM acts like a transparent proxy in the meaning that it caches locally, i.e., within its software environment, the client's invocations and the responses sent back by the APIs and passes the requests and the responses unmodified, except as required by the aging policy imposed by the SRM. In this case, the SRM is an independent software module, which is located in the same domain where the gateway and the services are running. The SRM communicates with the logical gateway through a common protocol, e.g., CORBA in the Parlay standard.

Alternatively, the SRM can be non-transparent, i.e., opaque, to the clients, implying that the clients are aware of its presence. According to this embodiment, the SRM acts as a proxy with an own IP address to which all traffic from the outside world is directed. In a CORBA context, the SRM can act as an IIOP proxy in the meaning that it controls at the application level all network communications between the CORBA objects inside the gateway and the outside world. According to this embodiment, the SRM is placed in front of the logical gateway and can be linked to more than one gateway and manages which gateway a communication is to be passed to.

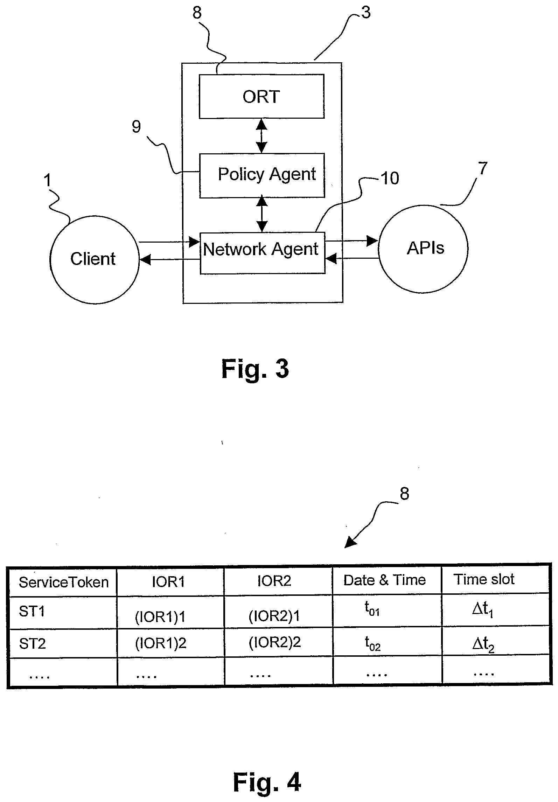

Figure 3 schematically illustrates the main software components of the SRM, which implement the aging policy, according to a preferred embodiment of the present invention. The SRM 3 includes a Network Agent 10, a Policy Agent 9 and an Object Reference Table (ORT) 8. All communications between the client 1 and the APIs 7 of the Parlay gateway (not shown) are intercepted and captured by the Network Agent 10. The Network Agent is a software entity, e.g., an executing program, capable of locating the client-server invocations and the client and server references. The Network Agent is an autonomous entity that can operate without direct external intervention and reacts to any method invocation. The Network Agent passes all or only some specific object references and method invocations, which have been captured, to a Policy Agent. The Policy Agent is a software entity capable of recording the messages passed by the Network Agent to the ORT. The Network Agent passes to the Policy Agent the object reference identifying the interface to which the client can obtain the service, i.e., the SCS-R or the manager object to the SCS-R.

If the invention is implemented in Parlay standard, the Network Agent passes to the Policy Agent, besides the object reference to the service capability, the object reference that identifies the client application making the request to the service.

If the invention is implemented in Parlay standard, in order to enable the termination of the service capability, the Network Agent communicates to the Policy Agent also the service token, which has been passed by the Framework to the client to confirm and identify the selected service requested by the client. As it will be explained more in detail in the Example, the service token is not the reference to the service capability, i.e., it does not per se allow access to the service.

When non-repudiation of the agreement to use the selected service is required, digital signature of the SLA can be invoked. The digital signature is an optional feature in the standard Parlay. Preferably, in the present invention, the digital signature algorithm selected by the client application and the OSA/PARLAY gateway is the NULL algorithm, i.e., the digital signature is not used. The assumption of not using the digital signature can be achieved by making the SRM aware of the private and public keys of the Parlay gateway.

The SRM components can be implemented as software objects programmed in an object-oriented programming language such as C++ so that the internal architecture of the SRM is modular. The SRM components use interfaces defined preferably in a program-agnostic language such as IDL to communicate to each other. Exchange of information between processes, i.e., instances of executable programs, and, if necessary, synchronization of processes are carried out by known communication mechanisms generally referred to as Inter-process communication (ICP), for instance by using shared memory or sockets.

In a preferred embodiment, the Network Agent intercepts all the traffic between the client application and the gateway by interacting with the operating system that comprises a TCP/IP stack. The Network Agent discards the communications that do not relate to the client's interactions with the gateway for requesting and obtaining one or more services, whereas it analyzes the access and selection requests of the SCSs. Within a Parlay gateway, the Network Agent recognizes only the Parlay communications.

The information captured by the Network Agent is passed to the Policy Agent. The Policy Agent can be configured so that it assigns the same lifetime to all the SCS objects or that it assigns different lifetimes in dependence on the type of SCS, for example the SCS associated to the sending of a SMS or the making of a telephone call, the two services requiring a different employment of network resources. The configuration of the Policy Agent could be determined by an administrator, who could be the person responsible of the management of the SRM.

The ORT could be a region-based memory in the RAM or hard disk of a computer, said memory being under the control of the Policy Agent. An example of ORT in a CORBA context in Parlay standard is schematically illustrated in Fig. 4. The ORT lists the object reference identifying the client making the request (IOR1), the object reference identifying the interface to which the client can request the service provided by the gateway (IOR2), i.e., the manager object of the SCS-R, the time t₀₁, t₀₂,... when the services has started (i.e., when the SCS-R has been obtained by the client) and the time slots Δₜ₁, Δₜ₂,... assigned as lifetime by the Policy Agent. The ORT includes also the service tokens (ST1, ST2,...) relative to each service, which identify the client's request and, optionally, can be signed by the client and/or the counterpart, i.e., the service provider or the network operator. Knowledge of the service token permits in Parlay standard the deletion of the service capability at the application level, i.e. Parlay APIs, when the lifetime has expired.

By receiving from the Network Agent the object references identifying each communication, the Policy Agent constantly checks the ORT to know whether the communication corresponds to an entry in the ORT.

When a new request arrives, entry is made in the ORT with the data that permit the identification of the service by capturing the necessary method invocations. When lifetime of a given service expires, the entry relative to that service is deleted from the ORT by the Policy Agent, which passes the information of the entry deletion to the Network Agent that destroys the service object.

According to an embodiment of the present invention, the SRM captures the SCS-R, also in the case a manager object of eth SCS-R (IOR2) exists and is captured. Knowledge of the SCS-R allows a fine-grained monitoring also in the time elapsing between to and t₀+Δt, i.e., when the service is active. Therefore, in a preferred embodiment, the ORT includes also the list of the object references to the network capability, the SCS-Rs (not shown in Fig. 4).

If the SRM implements a control policy by setting a maximum number of client's invocations after which deletion of the service capability occurred, knowledge of the SCS-R is necessary. The SRM has to capture the SCS-R also if the control policy is carried out by controlling the time window of inactivity, Δt'.

According to the present invention, the probability of a malicious attack, e.g., a SCS-R is captured by an attacker sniffing the network traffic, is lowered by limiting the time window of the life of the access to a service.

Within the described embodiment illustrated in Fig. 4, the IOR2 acts as a "manager" object that contains the methods to "create" and "destroy" the service capability identified by the object reference SCS-R. An IOR2 can manage also more objects identifying more service capabilities. The SCS-Rs are assumed to be "slave" objects that do not contain the create/destroy methods.

There are however programming models, for instance within Parlay standard, which allow the creation of service capabilities as "manager" objects. This implies that the SCS-Rs can be directly created by the service token and include the method "destroy". In this case, the SRM then has to capture, besides the service token, the SCS-R and the invoke the method "destroy" to both the service token and the SCS-R at the expiry of the lifetime.

### Example

In this example, the communication occurs between a client and a Parlay gateway and the Parlay APIs use CORBA as middleware infrastructure. The client application holds an interoperable object reference, IOR1, which identifies the client. In other words, the IOR1 is the client's object that will manage the invocations to obtain and manage a service capability. Method invocations are according to Parlay standard. The application requests access to the Services provided by the Parlay gateway. The initial interaction is the client's invocation of *initiate Authentication* on the Framework to initiate the authentication process. The application interacts with the Framework through the authentication phase, for instance using challenge/response exchanges, and then selects the Services required, optionally after invoking the Discovery interface to obtain a list of the services supported by the Framework.

According to the present invention, the SRM intercepts the initial contact of the application with the Parlay gateway, i.e. the initial invocation on the Framework's interface, extracts the client's IOR1 and from that moment "listens" to any communication between the client and the gateway. In this example, the SRM is transparent to the client application, which is unaware of its presence while going through all the interactions for the service access according to the Parlay procedure, said interactions including authentication, service discovery (if the client does not know what services are available), service selection and possibly service signing procedures.

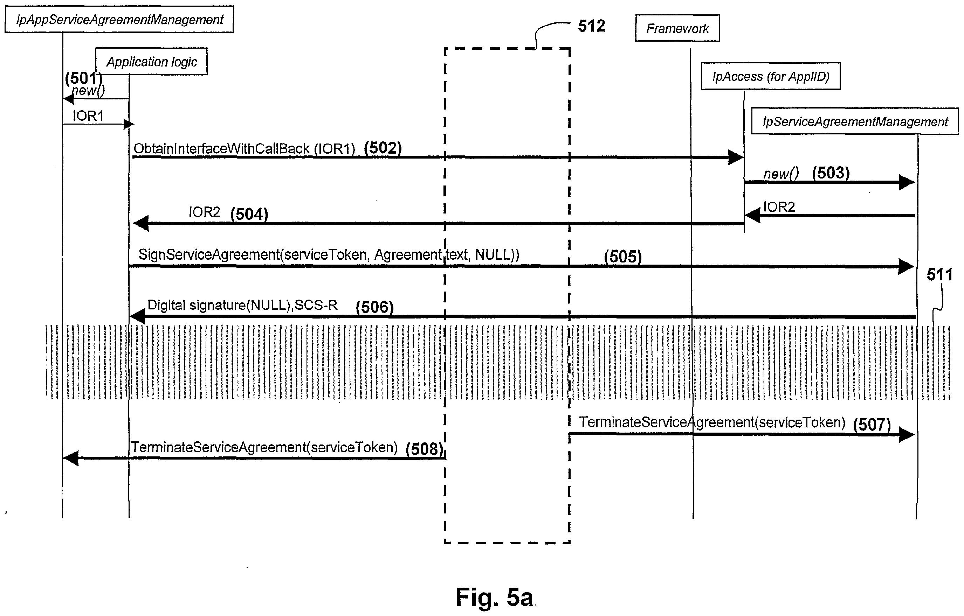

Figure 5a represents a sequence diagram representing the method invocations between a client application and a Parlay gateway, assuming that the client has already authenticated with the Framework. At this stage (step 501), the Framework has created by means of the *new()* method the *IpAppServiceAgreementManagament* interface. The SRM intercepting the communications between the gateway and the client application is represented in Fig, 5a with dashed box 512.

The application requests the object instance of the selected Service by invoking a Service Interface to the Framework, by means for instance of the Parlay standard invocation *obtainIriterfaceWithCallBack* to the *IpAccess (for ApplID)* interface (step 502), the latter being an interface created by the Framework in a preceding step (not shown). In step 502, the SRM has also captured the IOR1.

In response to the invocation, the Framework creates with *new()* the *IpServiceAgreementManagement* interface (step 503), which represents the interface to which the application requests the instances of the services. The object reference IOR2 identifying the interface to which the client can request the service is passed to the application logic at step 504. At this point, the application, by holding the object reference IOR2 at step 504, knows the interface which to request the service to. The IOR2 is the object reference to the object that manages the *IpSei-viceAgreementManagement* interface, i.e., the creation and destruction of the instances at that interface.

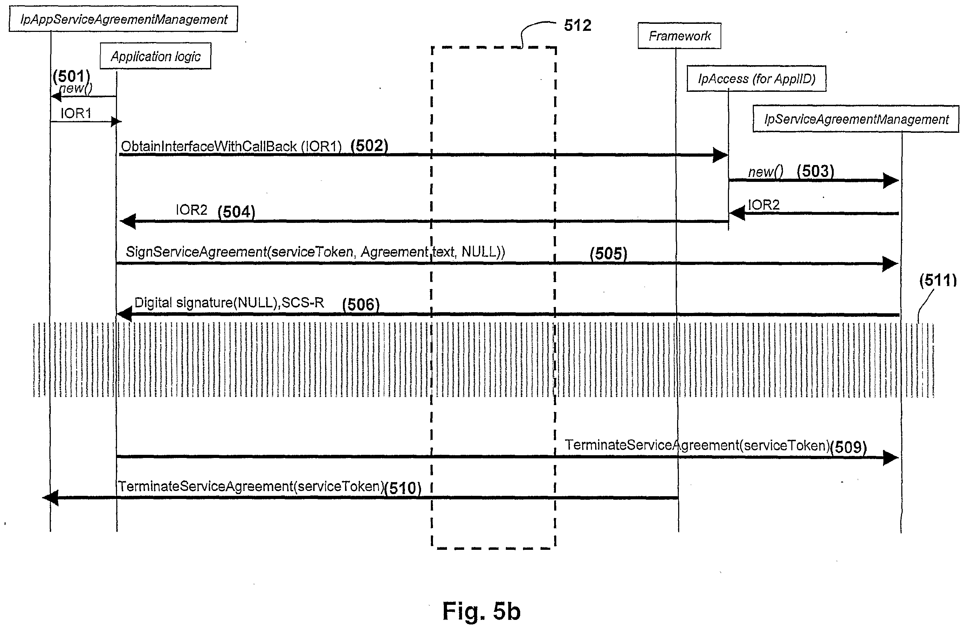

After having received the IOR2, the application selects a service by the method *selectService()* and a service token (ST) is returned to the application. These two last steps are not shown in Fig. 5a (and in Fig. 5b) for clarity reasons.

In the next step (505), the client application provides a service agreement that the Framework signs, by the method *signServiceAgreement* and the service token is passed back to the Framework. The *signServiceAgreement* is used to digitally sign the agreement and possibly provide non-repudiation for both parties. In the present example, the digital signature is not used, represented by the NULL algorithm, i.e., no signature.

In Parlay standard, generally a time slot is associated to the service token. If the time slot of the service token expires, a method accepting the service token will return an error code. It is important to note that the time slot associated by the Framework to the ST is the time elapsed between the request of the service after authentication, i.e., the delivery of the ST, and the obtaining of service capability, i.e., the SCS-R. In other words, the time slot associated to ST functions only in the phase of selection of the SCS. If the ST time slot has elapsed, the client has to start anew the Authentication process. This implies that the fate of the service capability, once the SCS-R is released, remains out of the Framework's control and the SCS-R could be used after the ST time slot has expired or could be stolen.

After step 505, the *IpServiceAgreementManagement* interface creates a service manager interface instance that provides the network capability to access the service, i.e., the SCS. This network capability is identified by the object reference SCS-R, which is returned to the application (step 506). The SCS-R is the IOR of the requested service and enables the application to use the requested service.

Optionally, the Framework returns at step 506 also the *digitalSignature*, which is the signed version of the hash of the SCS-R and agreement text given by the Framework. In the present example, the Framework returns an empty string, i.e., no signature. Digital signature can be avoided for instance by making the SRM aware of the private and public keys of the Parlay gateway.

By knowing the SCS-R, access to and use of the service capability is granted. At the instant (or immediately after) that the client has obtained the service access, a time slot is assigned by the SRM to the SCS-R. Alternatively, a maximum number of invocations or a time slot of inactivity is assigned.

The time elapsing between to and to+At, i.e., the time when the service is active, is indicated in Fig. 5a with the dashed area 511.

Although the present example refers to an application requesting a single service, it is to be understood that the application can select many SCSs. In this case, the application can discriminate among the different services because any service is matched by a unique ST and a unique SCS-R. Any method invoked on the SCS-R needs to have knowledge of the ST.

Referring to the embodiment illustrated in Fig. 3, the Network Agent of the SRM, which has intercepted every invocation since the initial client's call, has discarded all information that is not related to Parlay and has captured all the strings that allow the identification of what is the service requested and by whom it is requested. In particular, the Network Agent of the SRM intercepts the IOR1, the *obtainInterfaceWithCallBack* invocation (502) and the related response (504) so that it can capture the IOR2 returned to the client.

According to the present embodiment, the Network Agent has also captured the instant when the service has actually started to run, to, i.e., when the network capability represented by SCS-R has been returned to the application (step 506). All the information intercepted by the Network Agent is communicated to the Policy Agent in order to create a new entry into the Object Reference Table (ORT), in which the identification of the service and the client is associated to a specific date and time to, corresponding to the time when the application has actually accessed the service by receiving the SCS-R (step 506). The Policy Agent sets a predefined lifetime Δt running from to, e.g., Δt=120 s, which is entered in the ORT. This operation corresponds to assigning a lifetime to the service, like starting a timer at to. The Policy Agent exposes an interface, the *SCSIFRefIntercepted* interface, through which the Network Agent communicates the intercepted parameters.

At the expiring of the time slot Δt, the Policy Agent deletes the expired entry from the ORT and sends a "delete service capability" command to the Network Agent. The Network Agent exposes the method d*estroySCSIFRef,* which is invoked by the Policy Agent at the expiry of the lifetime. The Network Agent, using the parameters recorded in the ORT, invokes the method *terminateServiceAgreement()* to the Framework (step 507). The method 507 calls the destruction of the object reference to the service capability, the SCS-R, which is associated to a specific service token. In practice, this can be carried out by releasing the memory region associated to the service object and by deleting the entry in the directory that points to the reference.

Preferably, the client's object (IOR1) is informed at the lifetime expiry of the deletion of the SCS-R so that the application can interpret any exception that can originate from a client's invocation after the expiry of the lifetime. This is done by invoking the method *terminateServiceAgreement()* to the client's interface (step 508).

The client application and/or the Framework can optionally use the method *terminateServiceAgreement()* to terminate the service agreement for the SCS. This is illustrated by steps 509 and 510 in Fig. 5b. The Network Agent needs to capture these messages (steps 509 and 510) in order to inform the Policy Agent that will in turn purge the table of the entry which has terminated. This can occur if the method invocations are called by the client application and/or the gateway before the expiry of the lifetime assigned by the SRM.

The invocation of methods by the SRM (steps 507 and 508 of Fig. 5a) is independent of the standard Parlay invocations *terminateServiceAgreement(),* indicated in steps 509 and 510 in Fig. 5b, which can be called by the Framework and/or the client to terminate the service agreement. It is important to note that although the methods to terminate the use of the service are provided in the Parlay standard, their invocation is not mandatory in the standard and it is not associated to the service agreement between the application and the Framework. Therefore, leaving the control of the life of the service capability to the probability that the Parlay invocations will be invoked by the application or the Framework would be highly unsafe.

Preferably, the server objects identifying the services are stateless or being such that their state can be easily reconstructed. In this case, it is possible for the client to request a new instance of the server object without interfering with the logic of the service every time the SRM destroys the old instance of the server object.

One of the advantages of the present invention is that the security policy implemented by the SRM does not require modifications of the application interfaces implemented in the logical gateway.

Although the example and much of the previous detailed discussion relates to OSA/Parlay application interfaces implemented to a logical gateway that allows the access to network resources, although preferably, the invention is not necessarily limited to OSA/Parlay communications. The invention can be implemented in an object-oriented service architecture, which is based on standard application programming interfaces (APIs) as long as the SRM is able to recognize the communications defined according to the APIs of the service architecture among all the traffic that occurs in and out the gateway.

For instance, the control system employing a SRM according to the invention could be implemented in a service architecture comprising APIs defined for the Java™ platform, i.e., Java Integrated Network APIs for the Java™ platform (JAIN™).

## Claims

1. A method for controlling access to object-oriented services provided by network resources through a gateway (2) configured to store information related to said object-oriented services and to enable communications between the network resources and one or more client applications (1), wherein an object-oriented service comprises a set of application programming interfaces implemented in the gateway (2); the method comprising:
• intercepting communications between a client application (1) making a request for a service and the gateway (2);
• recognizing among the intercepted communications those related to the application programming interfaces;
• capturing among the recognized communications an object reference provided by the network resources to the client application (1), the captured object reference enabling the client application (1) to access the requested service with an associated service capability;
• assigning a lifetime to the requested service; and
• denying any client application (1) access to the requested service using the captured object reference when the assigned lifetime has expired.

2. The method of claim 1, wherein assigning a lifetime to the requested service comprises assigning a lifetime to the captured object reference to the service capability; and wherein denying any client application (1) access to the requested service includes deleting the captured object reference to the service capability when the assigned lifetime has expired.

3. The method of claim 1 or 2, wherein the captured object reference identifies the client application (1) making the request for the service.

4. The method of any one of the preceding claims, wherein capturing comprises registering captured object references, and comparing a captured object reference with the registered object references,

5. The method of claim 2, further comprising registering a time at which the captured object reference to the service capability is created.

6. The method of claim 5, wherein assigning a lifetime comprises associating a time slot to the captured object reference to the service capability.

7. The method of any one of the preceding claims, wherein capturing comprises capturing the object reference to the service capability.

8. The method of claim 7, wherein assigning a lifetime comprises associating a maximum number of invocations to the object reference to the service capability.

9. The method of claim 7, wherein assigning a lifetime comprises associating a time slot to the object reference to the service capability, said time slot being the elapsed time since no activity has taken place with the service capability.

10. The method of any one of the preceding claims, wherein capturing comprises capturing a service instance identification related to the requested service.

11. The method of claim 10, further comprising deleting the captured service instance identification after expiry of the lifetime.

12. A system for controlling access to object-oriented services provided by network resources through a gateway (2) configured to store information related to said object-oriented services and to enable communications between the network resources and one or more client applications (1), wherein an object-oriented service comprises a set of application programming interfaces implemented in the gateway (2); the system further comprising a service reference monitor (3) linked with the gateway (2) and configured to:
• intercept communications between a client application (1) making a request for a service and the gateway (2);
• recognize among the intercepted communications those related to the application programming interfaces;
• capture among said recognized communications an object reference provided by the network resources to the client application (1), the object reference enabling the client application (1) to access the requested service with an associated service capability;
• assign a lifetime to the requested service; and
• deny any client application (1) access to the requested service using the object reference when the assigned lifetime has expired.

13. The system of claim 12, wherein the service reference monitor (3) is further configured to:
• assign a lifetime to the captured object reference to the service capability; and
• delete the captured object reference to the service capability when the assigned lifetime has expired.

14. The system of claim 12 or 13, wherein the service reference monitor (3) includes a first software entity (10) capable of locating and capturing the communications between the client applications (1) and the gateway (2) and the object references identifying the client applications (1) and the requested services.

15. The system of claim 14, wherein the service reference monitor further comprises a second software entity (9) which is linked to the first software entity (10) and is apt to receive and record the object references and method invocations captured by the first software entity (10).

16. The system of claim 15, wherein the service reference monitor further (3) comprises a list (8) of the captured object references, said list being created and managed by the second software entity (9).

17. The system of claim 16, wherein the service reference monitor (3) acts as a transparent proxy to the client applications (1).

## Patentansprüche

1. Verfahren zum Steuern des Zugangs zu objektorientierten Diensten, die durch Netzwerkressourcen über einen Gateway (2) bereitgestellt werden, der dafür konfiguriert ist, Informationen bezüglich der objektorientierten Dienste zu speichern und eine Kommunikation zwischen den Netzwerkressourcen und einer oder mehreren Client-Anwendungen (1) zu ermöglichen, wobei ein objektorientierter Dienst einen Satz Anwendungsprogrammierschnittstellen umfasst, die in dem Gateway (2) implementiert sind; wobei das Verfahren Folgendes umfasst:
• Abfangen von Kommunikationen zwischen einer Client-Anwendung (1), die eine Anforderung für einen Dienst stellt, und dem Gateway (2);
• Erkennen, unter den abgefangenen Kommunikation, jener, die sich auf die Anwendungsprogrammierschnittstellen beziehen;
• Erfassen, unter den erkannten Kommunikationen, eines Objektverweises, der durch die Netzwerkressourcen an die Client-Anwendung (1) übermittelt wird, wobei der erfasste Objektverweis die Client-Anwendung (1) in die Lage versetzt, auf den angeforderten Dienst mit einer zugehörigen Dienstfähigkeit zuzugreifen;
• Zuweisen einer Lebensdauer zu dem angeforderten Dienst; und
• Verweigern des Zugangs jeder Client-Anwendung (1) zu dem angeforderten Dienst unter Verwendung des erfassten Objektverweises, wenn die zugewiesene Lebensdauer verstrichen ist.

2. Verfahren nach Anspruch 1, wobei das Zuweisen einer Lebensdauer zu dem angeforderten Dienst das Zuweisen einer Lebensdauer zu den erfassten Objektverweis auf die Dienstfähigkeit umfasst; und wobei das Verweigern des Zugangs jeder Client-Anwendung (1) zu dem angeforderten Dienst das Löschen des erfassten Objektverweises auf die Dienstfähigkeit enthält, wenn die zugewiesene Lebensdauer verstrichen ist.

3. Verfahren nach Anspruch 1 oder 2, wobei der erfasste Objektverweis die Client-Anwendung (1) identifiziert, welche die Anforderung für den Dienst stellt.

4. Verfahren nach einem der vorangehenden Ansprüche, wobei das Erfassen das Registrieren erfasster Objektverweise und das Vergleichen eines erfassten Objektverweises mit den registrierten Objektverweisen umfasst.

5. Verfahren nach Anspruch 2, das des Weiteren das Registrieren einer Zeit umfasst, zu der der erfasste Objektverweis auf die Dienstfähigkeit erstellt wird.

6. Verfahren nach Anspruch 5, wobei das Zuweisen einer Lebensdauer das Zuordnen eines Zeitschlitzes zu dem erfassten Objektverweis auf die Dienstfähigkeit umfasst.

7. Verfahren nach einem der vorangehenden Ansprüche, wobei das Erfassen das Erfassen des Objektverweises auf die Dienstfähigkeit umfasst.

8. Verfahren nach Anspruch 7, wobei das Zuweisen einer Lebensdauer das Zuordnen einer maximalen Anzahl von Aufrufen zu dem Objektverweis auf die Dienstfähigkeit umfasst.

9. Verfahren nach Anspruch 7, wobei das Zuweisen einer Lebensdauer das Zuordnen eines Zeitfensters zu dem Objektverweis auf die Dienstfähigkeit umfasst, wobei das Zeitfenster die verstrichene Zeit ist, seit der keine Aktivität mit den Dienstfähigkeit mehr stattgefunden hat.

10. Verfahren nach einem der vorangehenden Ansprüche, wobei das Erfassen das Erfassen einer Dienstinstanzidentifikation bezüglich des angeforderten Dienstes umfasst.

11. Verfahren nach Anspruch 10, das des Weiteren das Löschen der erfassten Dienstinstanzidentifikation nach dem Ablauf der Lebensdauer umfasst.

12. System zum Steuern des Zugangs zu objektorientierten Diensten, die durch Netzwerkressourcen über einen Gateway (2) bereitgestellt werden, der dafür konfiguriert ist, Informationen bezüglich der objektorientierten Dienste zu speichern und eine Kommunikation zwischen den Netzwerkressourcen und einer oder mehreren Client-Anwendungen (1) zu ermöglichen, wobei ein objektorientierter Dienst einen Satz Anwendungsprogrammierschnittstellen umfasst, die in dem Gateway (2) implementiert sind; wobei das System des Weiteren einen Dienstverweis-Überwachungsvorrichtung (3) umfasst, die mit dem Gateway (2) verknüpft ist und für Folgendes konfiguriert ist:
• Abfangen von Kommunikationen zwischen einer Client-Anwendung (1), die eine Anforderung für einen Dienst stellt, und dem Gateway (2);
• Erkennen, unter den abgefangenen Kommunikation, jener, die sich auf die Anwendungsprogrammierschnittstellen beziehen;
• Erfassen, unter den erkannten Kommunikationen, eines Objektverweises, der durch die Netzwerkressourcen an die Client-Anwendung (1) übermittelt wird, wobei der Objektverweis die Client-Anwendung (1) in die Lage versetzt, auf den angeforderten Dienst mit einer zugehörigen Dienstfähigkeit zuzugreifen;
• Zuweisen einer Lebensdauer zu dem angeforderten Dienst; und
• Verweigern des Zugangs jeder Client-Anwendung (1) zu dem angeforderten Dienst unter Verwendung des Objektverweises, wenn die zugewiesene Lebensdauer verstrichen ist.

13. System nach Anspruch 12, wobei die Dienstverweis-Überwachungsvorrichtung (3) des Weiteren für Folgendes konfiguriert ist:
• Zuweisen einer Lebensdauer zu dem erfassten Objektverweis auf die Dienstfähigkeit; und
• Löschen des erfassten Objektverweises auf die Dienstfähigkeit, wenn die zugewiesene Lebensdauer verstrichen ist.

14. System nach Anspruch 12 oder 13, wobei die Dienstverweis-Überwachungsvorrichtung (3) eine erste Software-Entität (10) enthält, die in der Lage ist, die Kommunikationen zwischen den Client-Anwendungen (1) und dem Gateway (2) und die Objektverweise, die die Client-Anwendungen (1) und die angeforderten Dienste identifizieren, zu lokalisieren und zu erfassen.

15. System nach Anspruch 14, wobei die Dienstverweis-Überwachungsvorrichtung des Weiteren eine zweite Software-Entität (9) umfasst, die mit der ersten Software-Entität (10) verknüpft ist und dafür geeignet ist, die durch die erste Software-Entität (10) erfassten Objektverweise und Verfahrensaufrufe zu empfangen und aufzuzeichnen.

16. System nach Anspruch 15, wobei die Dienstverweis-Überwachungsvorrichtung (3) des Weiteren eine Liste (8) der erfassten Objektverweise umfasst, wobei die Liste durch die zweite Software-Entität (9) erstellt und verwaltet wird.

17. System nach Anspruch 16, wobei die Dienstverweis-Überwachungsvorrichtung (3) als ein transparenter Proxy für die Client-Anwendungen (1) fungiert.

## Revendications

1. Procédé de commande d'accès à des services orientés objets fournis par des ressources de réseau par l'intermédiaire d'une passerelle (2) configurée pour stocker des informations relatives auxdits services orientés objets et pour permettre des communications entre les ressources de réseau et une ou plusieurs application(s) client (1), dans lequel un service orienté objets comprend un jeu d'interfaces de programmation d'application mises en oeuvre dans la passerelle (2) ; ledit procédé comprenant :
* l'interception de communications entre une application client (1) faisant une demande de service et la passerelle (2) ;
* la reconnaissance, parmi les communications interceptées, de celles qui sont liées aux interfaces de programmation d'application ;
* la capture, parmi les communications reconnues, d'une référence objet fournie par les ressources de réseau à l'application client (1), la référence objet capturée permettant à l'application client (1) d'avoir accès au service demandé avec une capacité de service associée ;
* l'attribution d'une durée de vie au service demandé ; et
* le refus d'accès, par toute application client (1), au service demandé en utilisant la référence objet capturée lorsque la durée de vie attribuée a expiré.

2. Procédé selon la revendication 1, dans lequel l'attribution d'une durée de vie au service demandé comprend l'attribution d'une durée de vie à la référence objet capturée associée à la capacité de service ; et dans lequel le refus, pour toute application client (1), d'accès au service demandé inclut la suppression de la référence objet capturée associée à la capacité de service lorsque la durée de vie attribuée a expiré.

3. Procédé selon la revendication 1 ou 2, dans lequel la référence objet capturée identifie l'application client (1) faisant la demande de service.

4. Procédé selon l'une quelconque des revendications précédentes, dans lequel la capture comprend l'enregistrement de références objets capturées, et la comparaison d'une référence objet capturée avec les références objets enregistrées.

5. Procédé selon la revendication 2, comprenant en outre l'enregistrement d'une heure à laquelle la référence objet capturée associée à la capacité de service est créée.

6. Procédé selon la revendication 5, dans lequel l'attribution d'une durée de vie comprend l'association d'un intervalle de temps à la référence objet capturée associée à la capacité de service.

7. Procédé selon l'une quelconque des revendications précédentes, dans lequel la capture comprend la capture de la référence objet associée à la capacité de service.

8. Procédé selon la revendication 7, dans lequel l'attribution d'une durée de vie comprend l'association d'un nombre maximum d'appels à la référence objet associée à la capacité de service.

9. Procédé selon la revendication 7, dans lequel l'attribution d'une durée de vie comprend l'association d'un intervalle de temps à la référence objet associée à la capacité de service, ledit intervalle de temps étant le temps écoulé depuis qu'aucune activité n'a eu lieu en rapport avec la capacité de service.

10. Procédé selon l'une quelconque des revendications précédentes, dans lequel la capture comprend la capture d'une identification d'occurrence de service liée au service demandé.

11. Procédé selon la revendication 10, comprenant en outre la suppression de l'identification d'occurrence de service capturée après l'expiration de la durée de vie.

12. Système de commande d'accès à des services orientés objets fournis par des ressources de réseau par l'intermédiaire d'une passerelle (2) configurée pour stocker des informations relatives auxdits services orientés objets et pour permettre des communications entre les ressources de réseau et une ou plusieurs application(s) client (1), dans lequel un service orienté objet comprend un jeu d'interfaces de programmation d'application mises en oeuvre dans la passerelle (2) ; le système comprenant en outre un moniteur de référence de service (3) relié à la passerelle (2) et configuré pour :
* intercepter des communications entre une application client (1) qui fait une demande pour un service et la passerelle (2) ;
* reconnaitre, parmi les communications interceptées, celles qui sont liées aux interfaces de programmation d'application ;
* capturer, parmi lesdites communications reconnues, une référence objet fournie par les ressources de réseau à l'application client (1), la référence objet permettant à l'application client (1) d'avoir accès au service demandé avec une capacité de service associée ;
* attribuer une durée de vie au service demandé ; et
* refuser à toute application client (1) l'accès au service demandé en utilisant la référence objet lorsque la durée de vie attribuée a expiré.

13. Système selon la revendication 12, dans lequel le moniteur de référence de service (3) est en outre configuré pour :
* attribuer une durée de vie à la référence objet capturée associée à la capacité de service ; et
* supprimer la référence objet capturée associée à la capacité de service lorsque la durée de vie attribuée a expiré.

14. Système selon la revendication 12 ou 13, dans lequel le moniteur de référence de service (3) inclut une première entité logicielle (10) capable de localiser et de capturer les communications entre les applications client (1) et la passerelle (2) et les références objets identifiant les applications client (1) et les services demandés.

15. Système selon la revendication 14, dans lequel le moniteur de référence de service comprend en outre une seconde entité logicielle (9) qui est reliée à la première entité logicielle (10) et qui est apte à recevoir et à enregistrer les références objets et les appels au procédé capturés par la première entité logicielle (10).

16. Système selon la revendication 15, dans lequel le moniteur de référence de service (3) comprend une liste (8) des références objets capturées, ladite liste étant créée et gérée par la seconde entité logicielle (9).

17. Système selon la revendication 16, dans lequel le moniteur de référence de service (3) agit comme un mandataire transparent associé aux applications client (1).
